# EUROPÄISCHE PATENTANMELDUNG

(11) **EP 4 104 925 A2**
(43) Veröffentlichungstag der Anmeldung: **21.12.2022**
(21) Anmeldenummer: 22179199.9
(22) Anmeldetag: 15.06.2022
(51) Int. Cl.: B01J 20/26, B01J 39/05, B01J 39/20, B01J 39/19, C02F 1/42

(54) **VERFAHREN ZUR HERSTELLUNG EINES SULFONIERTEN, AUFGERAUTEN, AUF EINEM KUNSTSTOFF-BASIERENDEN MATERIALELEMENTS**

(30) Priorität: 18.06.2021 DE 102021115844
(71) Anmelder: Hochschule Furtwangen, 78120 Furtwangen im Schwarzwald (DE)
(72) Erfinder: Fath, Andreas, 77716 Haslach (DE); Raphael, Bosch, 78554 Aixheim (DE); Korzin, Anika, 72160 Horb am Neckar - Bildechingen (DE)
(74) Vertreter: Witte, Weller & Partner Patentanwälte mbB

(57) **Zusammenfassung**

Die vorliegende Erfindung betrifft ein Verfahren zur Herstellung eines sulfonierten, aufgerauten, auf einem Kunststoff basierenden Materialelements, sowie das mit dem Verfahren hergestellte Materialelement und dessen Verwendung, insbesondere in der Reinigung von Gewässern. Das Verfahren umfasst die Schritte des Bereitstellens einer wässrigen Schwefel-haltigen Verbindung, des Hinzugebens eines Kunststoff-basierenden Materialelements zur wässrigen Schwefel-haltigen Verbindung, wobei eine Suspension erhalten wird, und des Sulfonierens des Kunststoff-basierenden Materialelements durch Hinzugabe von Wasserstoffperoxid zur Suspension, unter Bildung des sulfonierten, aufgerauten, auf einem Kunststoff-basierenden Materialelements.

## Beschreibung

Die vorliegende Erfindung betrifft ein Verfahren zur Herstellung eines sulfonierten, aufgerauten, auf einem Kunststoff-basierenden Materialelements, das sulfonierte, aufgeraute auf einem Kunststoff-basierenden Materialelement selbst und dessen Verwendung als Adsorbens, wie beispielsweise als Kationenaustauscher.

Derzeit werden pro Jahr weltweit mehrere Milliarden Tonnen Abfälle und Abfallstoffe aus Haushalt, Gewerbe und Industrie produziert. Besonders große Probleme bereitet hierbei der anfallende Kunststoff- bzw. Plastikabfall, der nur zu einem geringen Anteil recycelt wird. Während in Industrieländern eine Recyclingrate von bis zu 30% erreicht wird, liegt der Prozentsatz in Entwicklungsländern bei oftmals nicht mehr als 4%. Hinzu kommt die Problematik, dass ein Großteil des Plastikabfalls der Industrieländer nicht in den jeweils Abfall-produzierenden Ländern verbleibt und dort entsorgt oder verarbeitet wird, sondern stattdessen in Entwicklungsländer exportiert wird, in welchen Plastikabfall, - viel zu häufig auch mit anderen Abfällen als sogenannter Mischabfall - nicht kontrolliert gesammelt oder einer Wiederverwertung zugeführt wird, und stattdessen in großen Mengen in Gewässer und Meere gespült wird.

Neben der Problematik der weltweit steigenden Plastikabfallmenge, des damit verbundenen Müllexports in Entwicklungsländer und der damit verknüpften Umweltverschmutzung, besteht darüber hinaus in Entwicklungsländern oft ein Mangel an sauberem Trinkwasser, da dieses u.a. aufgrund des in die Gewässer gelangten Abfalls mit giftigen Chemikalien, Schwermetallen aber auch mit Plastikpartikeln verschmutzt ist. Das verschmutzte Trinkwasser wiederum kann dabei für zahlreiche Krankheiten wie Durchfall, Cholera, Typhus und Hepatitis ursächlich sein.

Die (Trink-)Wasseraufbereitung bzw. Wasserreinigung, wie bspw. von Gewässern und Abwässern, stellt heutzutage eine immer größere Herausforderung dar - nicht nur in den Entwicklungsländern sondern weltweit- da Abwässer immer stärker mit darin gelösten Stoffen, wie bspw. Hormonen, Antibiotika, Metallionen etc., belastet sind, die sich in herkömmlichen Wasseraufbereitungsanlagen bzw. -verfahren nur schwer, wenn überhaupt, entfernern lassen.

Dabei wird unter "Wasserreinigung" im Allgemeinen die Reinigung von Wasser von jeglicher Art von Unreinheiten, wie zum Beispiel Verschmutzungen oder Mikroorganismen verstanden. Die Wasserreinigung umfasst dabei nicht einen einzelnen Schritt, sondern stellt einen viele Teilschritte umfassenden Prozess dar. Welche Teilschritte benötigt werden, hängt von den Verunreinigungen im Wasser ab, die je nach Art des Wassers sehr unterschiedlich sein können.

Im Stand der Technik sind verschiedene Verfahren zur Wasserreinigung bzw. - aufbereitung bekannt, wobei diese Verfahren auch kombiniert, d.h. in Folge eingesetzt werden, um Wasser von Verunreinigungen und/oder Schadstoffen zu befreien.

Neben mechanischen Aufbereitungen, wie Rechen, Sieben, Filtern, werden auch physikalische Verfahren wie Sedimentation, Adsorption, und chemische Verfahren wie Oxidation, lonenaustausch, und Elektrodenionisation eingesetzt, sowie auch biologische Verfahren, bei welchen Bakterien störende Verbindungen im Wasser mikrobiologisch abbauen.

Insbesondere Wasserfilter spielen bei der Wasserreinigung eine große Rolle dabei, Partikel wie Trübstoffe bzw. Mikroorganismen oder unerwünschte im Wasser gelöste Substanzen bspw. Metallionen zu entfernen oder ihre Konzentration zu senken. Dabei unterscheidet man allgemein zwischen Filtern, die rein mechanisch sieben, und solchen, die chemisch-physikalisch arbeiten, um gelöste Substanzen zu entfernen.

Mittels der ersten Filtergruppe, zu welchen bspw. Kies-, Stein-, Metall- oder Sandfilter zählen, werden im Wesentlichen partikuläre Inhaltsstoffe abgetrennt, die für ein Passieren von Membranen zu groß sind.

Im Wasser gelöste Stoffe werden hingegen im Falle von organischen Substanzen oder Metallionen durch Adsorption, bspw. an Aktivkohle, oder, im Falle von Ionen, durch lonenaustausch aus dem Wasser entfernt.

Allgemein wird als Adsorption die Anreicherung von Stoffen aus einer flüssigen oder gasförmigen Phase heraus an die Festkörperoberfläche bezeichnet. Die treibenden Kräfte dabei sind zwischenmolekulare (Van-der-Waal) Kräfte. Bei der Adsorption werden demnach eine oder mehrere Komponenten (Adsorptive) aus einem Fluid (Flüssigkeit oder Gas) an Feststoffe (Adsorptionsmittel, Adsorbens) angelagert.

Aktivkohle ist dabei ein Sammelname für eine Gruppe von künstlich hergestellten, porösen Kohlenstoffen mit einer schwammartigen Struktur, die sich durch eine große spezifische Oberfläche (600 m²/g bis 1600 m²/g) auszeichnet, die dadurch entsteht, dass bei der chemischen oder thermischen Aktivierung selektiv Kohlenstoff aus der Struktur entfernt wird. Die Spalten und Klüfte, die in Folge vorhanden sind, werden als Poren bezeichnet. Diese haben einen Durchmesser von 0,1 nm bis 100 nm. Die zudem sehr große spezifische, unpolare Oberfläche führt dazu, dass aus wässrigen Lösungen vor allem hydrophobe Stoffe, wie z. B. aromatische Verbindungen, adsorbiert werden. Zur Reinigung kann entweder pulverförmige Aktivkohle eingesetzt werden, die gründlich mit Wasser vermischt und später wieder abfiltriert und entsorgt wird, oder aber in Form von Kornkohle oder Presslingen, die in Adsorberbehälter eingesetzt werden, durch welche der zu reinigende Wasserstrom hindurch geleitet wird.

Die Aktivkohlefiltration wird in der Regel als vierte Behandlungsstufe in Kläranlagen nachgeschaltet, um Spurenstoffe aus dem Zulauf in Flüsse zu eliminieren. Mittels Aktivkohle lassen sich u.a. Chlor, Ozon, Medikamentenrückstände, Hormone, Pestizide, Pflanzenschutzmittel, Geschmacksstoffe u.a. Stoffe aus dem Wasser entfernen.

Die Herstellung von Aktivkohle ist allerdings Material-, Zeit- und Energieaufwändig, wodurch deren Gebrauch zur Wasserreinigung teuer ist und deren Herstellung auch aus ökologischen Gesichtspunkten nachteilig ist. So muss für die Herstellung von Aktivkohle zunächst kohlenstoffreiches Pflanzenmaterial (wie Holz, Torf, Braunkohle, etc.) unter Ausschluss von Sauerstoff bei bis zu 900°C verbrannt (also verkohlt) werden, wodurch Poren im Material entstehen. Anschließend muss das Material noch Gas- oder chemisch aktiviert werden, wodurch die Oberfläche der Aktivkohle weiter vergrößert wird.

Alternativ oder in Kombination zur Aktivkohlen kommen in der Wasseraufarbeitung auch sogenannte lonentauscher zum Einsatz.

lonentauscher sind Materialien, mit denen im Wasser gelöste Ionen gegen andere Ionen der gleichen Art ersetzt werden können. Im Stand der Technik sind Ionenaustauscher als Säulen, die mit einem lonenaustauschermaterial gefüllt sind, oder als Membranen bekannt. Um das Wasser zu reinigen wird das lonenaustauschermaterial von der zu behandelnden Lösung durchströmt. Die auszutauschenden Ionen werden am Ionenaustauschermaterial gebunden, das seinerseits dafür eine äquivalente Stoffmenge von vorher gebundenen Ionen in die Lösung abgibt. Beispielsweise kann ein Kationen-Ionenaustauscher Calcium-Kationen, die im normalen Leitungswasser gelöst sind gegen Natrium-Kationen, die an den Ionenaustauscher gebunden sind, austauschen.

In der Regel bestehen Ionenaustauscher aus Polymeren, welches durch eine funktionelle Gruppe modifiziert wird. Je nachdem welche funktionelle Gruppe am Polymer gebunden ist und demnach auch welche Art von Ionen ausgetauscht werden sollen, unterscheidet man zwischen Kationenaustauscher und Anionenaustauscher. Im Fall eines Kationenaustauschers ist die funktionelle Gruppe eine anionische Gruppe.

Im Stand der Technik sind sulfonierte Kationenaustauscher die aus Polymeren bestehen bekannt. Diese sind mit einer Sulfonsäuregruppe (-SO₃H) funktionalisiert. Die stark saure Eigenschaft der Sulfonsäuregruppe ist durch die leichte Abgabe des H⁺-Ions im wässrigen System begründet. Durch die Abgabe des Protons bleiben negativ geladene Sufonatgruppen am Polymer zurück (-SO₃⁻). An diese negativen Ladungen im Polymer können positiv geladene Verbindungen oder Metallkationen angelagert werden. In diesem Zusammenhang spricht man auch von einer Adsorption der Verbindungen bzw. der Metallkationen. Das Prinzip des lonentausches beruht darauf, dass Ionen umso stärker an den Ionenaustauscher gebunden werden, je höher ihre Ladung, und bei gleicher Ladung, je größer ihr lonenradius ist.

Aufgrund der Adsorptions-Eigenschaft werden derartige funktionalisierte Polymere in der Wasseraufbereitung oder in der Abwasserbehandlung eingesetzt, um Metallkationen zu entfernen. Insbesondere in der in der metallverarbeitenden Industrie sind derartige funktionalisierte Polymere besonders beliebt, um Schwermetallkationen, wie beispielsweise Cu²⁺, Pb²⁺, Zn²⁺, Ni²⁺, Cd²⁺, Cr³⁺ oder ähnliche Ionen, aus dem Abwasser zu entfernen bzw. derart zu reduzieren, dass bestehende Grenzwerte nicht überschritten werden. Nach dem Einsatz eines solchen Kationentauschers, also sobald der Kationentauscher vollständig beladen ist, kann er durch Rückspülungen regeneriert werden.

Ein bekannter und häufig eingesetzter Kationenaustauscher dieser Art ist ein sulfoniertes Styrol-Divinylbenzol-Copolymer (ein Styrol-Copolymer, das mit Divinylbenzol vernetzt ist), das häufig als Wasserenthärter verwendet wird. Wegen dessen energieintensiven Herstellungsprozess ist dieses Copolymer allerdings aus ökonomischer und ökologischer Hinsicht für einen größeren Einsatz zur Wasserreinigung uninteressant.

Obwohl die Kationentauscher wiederverwendet werden können, werden sie jedoch häufig nur als Einwegartikel verwendet. Dies erhöht eine ungewollte Plastikmüllproduktion zusätzlich.

Vor diesem Hintergrund ist es eine Aufgabe dieser Erfindung, Mittel bereitzustellen, die die oben erwähnten Filter (Aktivkohle und Kationentauscher) ersetzen und die Nachteile des Standes der Technik überwinden können.

Erfindungsgemäß wird diese Aufgabe gelöst durch ein Verfahren zur Herstellung eines sulfonierten, aufgerauten auf einem Kunststoff-basierenden Materialelements, aufweisend die folgenden aufeinanderfolgenden Schritte: a) Bereitstellen einer wässrigen Schwefel-haltigen Verbindung; b) Hinzugabe eines Kunststoff-basierenden Materialelements zur wässrigen Schwefel-haltigen Verbindung, wobei eine Suspension erhalten wird; und c) Sulfonieren des Kunststoff-basierenden Materialelements durch Hinzugabe von Wasserstoffperoxid zur Suspension, unter Bildung des sulfonierten, aufgerauten, auf einem Kunststoff-basierenden Materialelements.

Die Aufgabe wird ferner gelöst durch das mittels des Verfahrens hergestellte sulfonierte, aufgerauten, auf einem Kunststoff-basierenden Materialelement, sowie durch die Verwendung des erfindungsgemäß hergestellten sulfonierten, aufgerauten auf einem Kunststoff-basierenden Materialelement.

Die der Erfindung zugrundeliegende Aufgabe wird auf diese Weise vollkommen gelöst.

Es wurde herausgefunden, dass insbesondere der Einsatz von Wasserstoffperoxid (H₂O₂) zusammen mit einer Schwefel-haltigen Verbindung zu einem sulfonierten und aufgerauten Materialelement führt, welches herausragende adsorbierende Eigenschaften aufweist, die gegenüber den im Stand der Technik bekannten sulfonierten Materialelementen deutlich verbessert sind. Die adsorbierenden Eigenschaften sind ähnlich mit denen von Aktivkohle in Verbindung mit den bekannten sulfonierten Kationenaustauscher, wobei Aktivkohle eine poröse Oberflächenstruktur aufweist, wohingegen das erfindungsgemäße sulfonierte Materialelement eine aufgeraute Oberflächenstruktur aufweist, sodass das erfindungsgemäße sulfonierte Materialelement die Eigenschaften der im Stand der Technik bekannten Aktivkohle und den bekannten sulfonierten Kationenaustauschern verbindet. Demnach kombiniert das erfindungsgemäße sulfonierte, aufgeraute Materialelement zwei Filtereigenschaften, nämlich 1) die Filterwirkung bzw. Adsorption durch eine aufgeraute Oberfläche und 2) die Filterwirkung aufgrund der funktionellen Sufonatgruppen am Materialelement. Demnach lässt sich eine verbesserte Reinigungswirkung mit nur einem Materialelement ermöglichen, wogegen im Stand der Technik zwei Filter benötigt werden. Das erfindungsgemäße Verfahren ist demnach zeit- und kostensparender als die Herstellung von 1) Aktivkohle und 2) sulfonierten Polymeren, da sie einen Filter mit der Wirkung von zwei bekannten Filtern (Aktivkohle und sulfonierten Polymeren) in einem Herstellungsverfahren vereinigt.

Im Rahmen der vorliegenden Erfindung wurde auch ein Verfahren entwickelt, mit Hilfe dessen Kunststoff-basierende Materialelemente, insbesondere Kunststoffabfall/ Ausschuss- oder Recyclingprodukte einer neuen Verwendung zugeführt werden können. Das zur Verfügung gestellte Kunststoff-basierende Materialelement, das als Kunststoffabfall/ Ausschuss- oder Recyclingprodukt bereitgestellt werden kann, wird sulfoniert und damit recycelt, sodass das eingesetzte Kunststoff-basierende Materialelement wiederverwendet werden kann. Ein besonderer Vorteil an dem erfindungsgemäßen Verfahren ist die Tatsache, dass der Kunststoffabfall auch als "Mischabfall" verwendet werden kann. Erfindungsgemäß handelt es sich bei Mischabfall um Kunststoffabfall, der zusätzlich mit organischen oder anorganischen Verbindungen/Abfall versetzt ist. Ferner ist für das erfindungsgemäße Verfahren kein "sortenreines" Kunststoff-basierendes Materialelement notwendig, stattdessen sind Mischungen aus verschiedenen Kunststoffen einsetzbar. Darüber hinaus kann es sich bei dem Kunststoffabfall auch um bereits oxidierten Kunststoffabfall handeln, also solcher, welcher durch Umwelteinflüsse bereits verwittert ist.

Aufgrund der Hinzugabe von Wasserstoffperoxid in die Suspension aus der Schwefel-haltigen Verbindung und des Kunststoff-basierenden Materialelements wird das auf Kunststoff-basierenden Materialelement nicht nur sulfoniert, sondern durch das Zusammenwirken der Schwefel-haltigen Verbindung und dem Wasserstoffperoxid wird die Oberflächenstruktur des Kunststoff-basierenden Materialelements derart verändert, dass es nunmehr eine veränderte Oberflächenstruktur aufweist und damit aufgeraut ist. Die Oberflächenstruktur verändert sich von einer glatten Struktur hin zu einer besonders aufgerauten Oberflächenstruktur, die wiederrum zu einer verbesserten Adsorber-Eigenschaft führt. Dabei ist vorliegend unter einer "aufgerauten" Struktur oder Oberflächenstruktur eine Oberfläche zu verstehen, die gegenüber der gleichen unbehandelten, glatten Struktur eine unebene Oberflächenhöhe, aber ohne Porenbildung aufweist. Um die Rauheit bzw. Glätte einer unbehandelten und entsprechend behandelten Oberfläche zu ermitteln, können verschiedene Verfahren und Geräte eingesetzt werden, bspw. optische Methoden und Messgeräte, bspw. mittels Konfokalmikroskopie, oder Rasterelektronenmikroskopie.

Die verbesserte Adsorber-Eigenschaft ist demnach auch, zusätzlich zu den bereits oben beschriebenen Filtereigenschaften, dadurch begründet, dass die Oberflächenstruktur des Materialelements durch die Aufrauung verändert bzw. vergrößert wird, wodurch insgesamt deutlich mehr SO₃⁻-Bindungsstellen im Materialelement vorhanden sind. Es konnte herausgefunden werden, dass derartige Effekte bei Materialien, die herkömmlich Sulfoniert wurden, also ohne die Verwendung von Wasserstoffperoxid, nicht auftreten.

Gegenüber herkömmlichen Sulfonierungsverfahren zur Herstellung von sulfonierten Materialelementen, bei denen es sich um energieintensive Herstellungsprozesse ohne Einsatz von Wasserstoffperoxid handelt, läuft das erfindungsgemäße Verfahren bereits ohne Wärmezuführung in ausreichenden Ausbeuten und mit hervorragenden Oberflächenveränderungen ab. Eine Temperaturerhöhung durch Wärmeeintrag oder Reaktionsbedingungen unter vermindertem Druck, wie sie bei herkömmlichen Verfahren angewandt werden, sind daher nicht notwendig. Dies wird erreicht durch die stark exotherme Reaktion der Schwefel-haltigen Verbindung und dem Wasserstoffperoxid.

Aufgrund der verbesserten Adsorber-Eigenschaft des sulfonierten, aufgerauten auf einem Kunststoff-basierenden Materialelements kann dieses in zahlreichen Gebieten eingesetzt und verwendet werden, beispielsweise als Adsorbermaterial in der Wasseraufbereitung oder der Reinigung von Gewässern. Aufgrund der funktionellen Gruppe -SO₃⁻ eignet sich das erfindungsgemäße Materialelement auch als Kationenaustauscher, da positiv geladene Verbindungen gut an der funktionellen Gruppe anlagern können. Beispielsweise können Schwermetallkationen wie beispielsweise Cu²⁺, Pb²⁺, Zn²⁺, Ni²⁺, Cd²⁺, Cr³⁺ oder ähnliche Ionen an die Sulfonatgruppen binden.

Das erfindungsgemäß hergestellte Materialelement stellt damit eine hervorragende und zugleich bessere Alternative zu den im Stand der Technik bekannten sulfonierten Adsorbermaterialien dar, da zum einen das Kunststoff-basierenden Materialelement nicht kosten- und energieaufwendig hergestellt werden muss, sondern darüber hinaus auch bereits vorliegendes Abfall-/ Ausschuss- oder recyceltes Kunststoff-Material zur Herstellung eingesetzt werden kann. Ferner ist der Schritt der Sulfonierung weniger kosten- und energieaufwendig als die im Stand der Technik bekannte Verfahren, da kein zusätzlicher Wärmeeintrag notwendig ist.

In der vorliegenden Erfindung wird "Materialelement" und "Kunststoff-basierendes Materialelement" als Synonym verwendet. Ferner wird "erfindungsgemäßes Materialelement", "sulfoniertes, aufgerautes Kunststoff-basierendes Materialelement" und "sulfoniertes, Kunststoff-basierendes Materialelement" als Synonym verwendet.

Erfindungsgemäß handelt es sich bei einem "Kunststoff-basierendem Materialelement " um einen Festkörper jeglicher Form, wobei der Festkörper aus Kunststoff hergestellt wurde oder Kunststoff enthält. Das Materialelement ist erfindungsgemäß demnach aus Polymeren aufgebaut. Das Polymer ist wiederrum aus Monomer-Einheiten aufgebaut. Weist das Polymer nur eine einzige Monomer-Einheit auf, wird in diesem Zusammenhang von einem Homopolymer gesprochen. Ist das Polymer dagegen aus verschiedenen Monomer-Einheiten polymerisiert worden, spricht mach von einem Copolymer. Erfindungsgemäß kann es sich bei dem Polymer um ein Homo- oder Copolymer handeln, wobei das Polymer bevorzugt mindestens eine aromatische Monomer-Einheit aufweist, die in Schritt c) des erfindungsgemäßen Verfahrens sulfoniert werden kann.

Erfindungsgemäß kann das Kunststoff-basierendem Materialelement, welches aus Kunststoff hergestellt wurde oder Kunststoff enthält, zusätzlich Ester der Phthalsäure aufweisen. Phthalate bzw. deren Analoga können als sogenannte Weichmacher in den Kunststoffen enthalten sein, sodass dieser Weichmacher zusätzlich in Schritt c) des erfindungsgemäßen Verfahrens sulfoniert werden kann, was insgesamt zu einer größeren Anzahl an SO₃⁻- Bindungsstellen führt.

Erfindungsgemäß handelt es sich bei einem "Kunststoff-basierendem Materialelement" nicht zwingend um einen "sortenreinen" Kunststoff, es kann sich auch um eine Mischung aus verschiedenen Kunststoffen handeln. Beispielsweise kann die Mischung aus zwei oder mehr der folgenden Kunststoffen bestehen: Polystyrol, Acrylnitril-Butadien-Styrol (ABS) Copolymer, Styrol-Acrylnitril (SAN) Copolymer, Acrylester-Styrol-Acrylnitril (ASA) Copolymer und Polycarbonat.

Da Kunststoff-basierende Materialelemente - oder kurz Kunststoffe - heutzutage in den verschiedensten Industrien eingesetzt werden, existieren einerseits viele Kunststoff - Produkte, die entweder Ausschuss- oder verbrauchte Waren darstellen, oder sogar überschüssiges Kunststoff-Ausgangsmaterial, das nicht für das ursprünglich vorgesehene Endprodukt eingesetzt, sondern verworfen wird. Diese Materialien/Produkte, können entweder direkt oder im recycelten oder modifizierten Zustand vorteilhafterweise in dem vorliegend beschriebenen Verfahren eingesetzt werden. Darüber hinaus kann bereits oxidierter Kunststoff erfindungsgemäß eingesetzt werden. Solcher Kunststoff kann beispielsweise durch verschiedene Wettereinflüsse angegriffen worden sein und bereits teilweise zersetz vorliegen.

Erfindungsgemäß handelt es bei einer "Schwefel-haltigen Verbindung" um jegliches Sulfonierungsreagenz, mit dem das Kunststoff-basierenden Materialelement unter Hinzugabe von Wasserstoffperoxid sulfoniert werden kann. Erfindungsgemäß handelt es sich bei der Schwefel-haltigen Verbindung bevorzugt um eine wässrige Lösung. Hierbei kann die Schwefel-haltige Verbindung bereits als Lösung vorliegen, insbesondere als konzentrierte Lösung. Alternativ kann die Schwefel-haltige Verbindung in einem Lösungsmittel gelöst werden. Erfindungsgemäß handelt es sich bei der Schwefel-haltigen Verbindung bevorzugt um Schwefelsäure (H₂SO₄). Andere mögliche Schwefel-haltigen Verbindung können bspw. Chlorsulfonsäure (HSO₃Cl), Peroxodischwefelsäure, (H₂S₂O₈) oder Schwefeltrioxid (SO₃) sein. Erfindungsgemäß liegen die Schwefel-haltigen Verbindungen bevorzugt in konzentrierter Form vor.

Erfindungsgemäß handelt es bei "Wasserstoffperoxid" um die chemische Verbindung H₂O₂. Erfindungsgemäß wird das Wasserstoffperoxid bevorzugt in Konzentrationen zwischen 30 und 35% als wässrige Lösung verwendet, wobei auch höher konzentrierte Lösungen eingesetzt werden können. Bei Wasserstoffperoxid handelt es sich um ein sehr starkes Oxidationsmittel, sodass das Wasserstoffperoxid in der Suspension mit der Schwefel-haltigen Verbindung reagiert. Handelt es sich bei der Schwefel-haltigen Verbindung beispielsweise um konzentrierte Schwefelsäure, kann diese mit Wasserstoffperoxid zu Peroxomonoschwefelsäure und Wasser reagieren (H₂SO₄ + H₂O₂ -> H₂SO₅ + H₂O).

Erfindungsgemäß handelt es sich bei der "Sulfonierung" um die Einführung einer Sulfonsäuregruppe (-SO₃H) innerhalb des Kunststoff-basierenden Materialelements bzw. dem Polymer. Erfindungsgemäß werden bevorzugt die Aromaten der Monomer-Einheiten des Polymers und/oder die Aromaten des im Kunststoff enthaltenden Weichmachers sulfoniert. Erfindungsgemäß erfolgt die Sulfonierung an der Manteloberfläche des Kunststoff-basierenden Materialelements. Demnach wird der Kern des Kunststoff-basierenden Materialelements nicht sulfoniert.

Innerhalb des Schritts der Sulfonierung wird erfindungsgemäß auch die Oberflächenstruktur stark verändert, sodass sich eine aufgeraute Oberflächenstruktur bildet. Dies wird erreicht durch die harsche Reaktion der wässrigen Schwefel-haltigen Verbindung und dem Wasserstoffperoxid mit dem Kunststoff-basierenden Materialelements.

Gemäß einer bevorzugten Ausführungsform wird in Schritt c) des erfindungsgemäßen Verfahren Peroxomonoschwefelsäure gebildet und/oder hinzugefügt.

Peroxomonoschwefelsäure (H₂SO₅), auch bekannt als Peroxoschwefelsäure, Peroxy-Monoschwefelsäure oder Carosche Säure, ist eine Oxosäure des Schwefels. Sie kann beispielsweise aus konzentrierter Schwefelsäure und Wasserstoffperoxid hergestellt werden (H₂SO₄ + H₂O₂ -> H₂SO₅ + H₂O). Demnach kann die Peroxomonoschwefelsäure *in situ* hergestellt werden, sodass sie nicht zwingend zusätzlich zur Suspension hinzugegeben werden muss. Die beschriebene Reaktion aus konzentrierter Schwefelsäure und Wasserstoffperoxid ist stark exotherm, sodass es zu einer Hitzeentwicklung kommt. Diese entstehende Wärme kann vorteilhafterweise bei der Sulfonierung in Schritt c) des erfindungsgemäßen Verfahrens ausgenutzt werden, um das Materialelement in guten Ausbeuten zu sulfonieren.

Peroxomonoschwefelsäure ist eine instabile Verbindung, sodass sie zur Verwendung innerhalb der Sulfonierung bevorzugt frisch hergestellt wird. Bevorzugt durch die Umsetzung aus konzentrierter Schwefelsäure und Wasserstoffperoxid. Alternativ kann die Peroxomonoschwefelsäure als Feststoff beispielsweise als Salz, insbesondere als Kaliumperoxomonosulfat, der Suspension hinzugefügt werden.

Diese Ausführungsform hat den Vorteil, dass sich Peroxomonoschwefelsäure sehr gut als Sulfonierungsmittel eignet. Sie ist ein besseres Sulfonierungsmittel als bspw. konzentrierte Schwefelsäure allein.

Diese Ausführungsform hat ferner den Vorteil, dass aufgrund der Peroxomonoschwefelsäure in der erfindungsgemäßen Reaktionslösung sehr harsche/saure Bedingungen vorliegen. Demnach bewirkt die vorhandene Peroxomonoschwefelsäure das Fremdstoffe, die beispielsweise durch die Bereitstellung des Kunststoff-basierenden Materialelements in die Reaktionslösung hineingetragen wurden, zersetzt werden können. Dies bietet den Vorteil, dass auch verunreinigte Kunststoff-basierenden Materialelemente erfindungsgemäß eingesetzt werden können. Bei der Verunreinigung kann es sich sowohl um organischen als auch anorganische Fremdstoffe handeln.

Gemäß einer weiteren Ausführungsform ist die Schwefel-haltige Verbindung ausgewählt ist aus der Gruppe bestehend aus: Sulfoxylsäure (H₂SO₃), schweflige Säure (H₂SO₃), Schwefelsäure (H₂SO₄), thioschweflige Säure (H₂S₂O₂), Thioschwefelsäure (H₂S₂O₃), dithionige Säure (H₂S₂O₄) dischweflige Säure (H₂S₂O₅), Dithionsäure (H₂S₂O₆), Dischwefelsäure (H₂S₂O₇), Peroxodischwefelsäure, (H₂S₂O₈) Schwefeltrioxid (SO₃), Fluorsulfonsäure(HSO₃F) und Chlorsulfonsäure (HSO₃Cl) , wobei insbesondere Schwefelsäure (H₂SO₄), Peroxodischwefelsäure, (H₂S₂O₈), Schwefeltrioxid (SO₃) und Chlorsulfonsäure (HSO₃Cl) bevorzugt sind.

Es hat sich gezeigt, dass die genannten Schwefel-haltigen Verbindungen zusammen mit Wasserstoffperoxid ein geeignetes Sulfonierungsmittel darstellen, wobei gleichzeitig die Oberflächenstruktur des Materialelements verändert wird, hin zu einer aufgerautenOberflächenstruktur. Aus der Gruppe der genannten Schwefel-haltige Verbindung sind Schwefelsäure (H₂SO₄), Peroxodischwefelsäure, (H₂S₂O₈), Schwefeltrioxid (SO₃) und Chlorsulfonsäure (HSO₃Cl) bevorzugt, wobei konzentrierte Schwefelsäure besonders bevorzugt ist. Die Schwefel-haltigen Verbindungen liegen bevorzugt in konzentrierter Form vor.

Diese Ausführungsform hat den Vorteil, dass es sich bei den genannten Schwefel-haltigen Verbindungen, wie beispielsweise konzentrierte Schwefelsäure, um kostengünstige Sulfonierungsmittel handelt. Hierdurch wird das Verfahren insgesamt kostengünstig, da auch das Kunststoff-basierende Materialelement in Form von Kunststoffabfall verwendet werden kann. Ferner reagieren die genannten Schwefel-haltigen Verbindungen mit Wasserstoffperoxid in einer stark exothermen Reaktion, sodass es zu einem Wärmeeintrag innerhalb der Reaktionsmischung kommt, sodass keine zusätzliche Wärme der Reaktion hinzugefügt werden muss, was die Kosten ebenfalls verringert.

Gemäß einer Ausführungsform ist bevorzugt, wenn die Schwefelsäure in einer Ausgangskonzentration von mindestens 50%, 60%, 70%, 80%, 90%, 91%, 92%, 93%, 94%, 95%, 96%, 97%, 98%, 99% oder 100% eingesetzt wird. Besonders bevorzugt ist, wenn die Schwefelsäure in einer Anfangskonzentration von 96% aufweist. In einer bevorzugten Ausführungsform wird die Schwefelsäure im Überschuss hinzugegeben, sodass die Endkonzentration der Schwefelsäure in der Suspension vorzugsweise zwischen 25% und 80% liegt, besonders bevorzugt zwischen 60% und 80%, insbesondere bevorzugt zwischen 70 % und 75%.

Im Gegensatz zur Schwefel-haltigen Verbindung wird das Wasserstoffperoxid bevorzugt nicht im Überschuss hinzugegeben. Gemäß einer Ausführungsform ist bevorzugt, wenn das Wasserstoffperoxid portionsweise zur Suspension aus dem Kunststoff-basierenden Materialelement und der wässrigen Schwefel-haltigen Verbindung hinzugegeben wird. Dabei wird unter "portionsweise" die Hinzufügung des Wasserstoffperoxids in mehreren Portionen verstanden. Dabei wird die Gesamtmenge des hinzugegebenen Wasserstoffperoxids bevorzugt auf 2, 3, 4, 5, 6, 7, 8, 9 oder 10 gleichmäßig oder ungleichmäßig große Portionen aufgeteilt. Unter "portionsweise" wird erfindungsgemäß auch die dosierte Hinzugabe des Wasserstoffperoxids als Tropfen verstanden. Dies kann beispielsweise mittels eines Tropftrichters oder ähnlichem erreicht werden. Dabei ist bevorzugt wenn die portionsweise Hinzugabe innerhalb von 20 Minuten erfolgt, oder mit anderen Worten, dass zwischen der Hinzugabe der ersten Portion Wasserstoffperoxid zur Suspension und der letzten Portion Wasserstoffperoxid 20 Minuten liegen. Besonders bevorzugt ist die Hinzugabe innerhalb von 10 Minuten oder innerhalb von 5 Minuten. Je nach Gesamtmenge der eingesetzten Edukte (Wasserstoffperoxid, Schwefel-haltige Verbindung und Kunststoff-basierendes Materialelement) kann jeweils eine der beschriebenen Hinzugaben bevorzugt sein. Durch diese Art der Hinzugabe lassen sich die Reaktionstemperatur der Reaktionslösung und damit die Reaktion insgesamt steuern. Im Rahmen der vorliegenden Erfindung konnte gezeigt werden, dass die Reihenfolge der Hinzugabe von Wasserstoffperoxid zur Suspension entscheidend ist für die Bildung des sulfonierten, aufgerauten, auf einem Kunststoff-basierenden Materialelements, insbesondere für eine optimale Sulfonierung als auch für eine optimale Oberflächenveränderung. Vergleichsversuche, bei denen zunächst eine Beize aus Wasserstoffperoxid und einer Schwefel-haltigen Verbindung hergestellt wurde, die dann zum Sulfonieren des Kunststoff-basierenden Materialelements diente, führten nicht zu dem gewünschten erfindungsgemäßen Produkt. Dieses Produkt unterschied sich sowohl in der Anzahl der Sulfonierungsstellen als auch in der aufgerauten Oberfläche.

Gemäß einer weiteren Ausführungsform ist die Schwefel-haltige Verbindung Schwefelsäure, wobei die Schwefelsäure und das Wasserstoffperoxid in einem Volumenverhältnis aus 10:1 bis 1:1, besonders bevorzugt in einem Verhältnis aus 5:1 bis 3:1 verwendet werden.

Gemäß dieser Ausführungsform beziehen sich die Volumenverhältnisse auf die Volumenmenge, die insgesamt, d.h. bis zum Abschluss der Sulfonierung, verwendet wird. Da das Wasserstoffperoxid bevorzugt portionsweise zur Suspension hinzugegeben wird, können sich zwischenzeitlich, also während des Sulfonierens andere Volumenverhältnisse als die genannten ergeben. Besonders bevorzugt ist ein Volumenverhältnis von Schwefelsäure zu Wasserstoffperoxid von 4:1.

Gemäß einer weiteren Ausführungsform ist das Kunststoff-basierenden Materialelement ein Homopolymer oder Copolymer, bestehend aus mindestens einem aromatischen Monomer.

Es hat sich gezeigt, dass dann, wenn das Kunststoff-basierenden Materialelement aus einem Homopolymer oder einem Copolymer besteht, das mindestens eine aromatische Monomer-Einheit aufweist, eine besonders gute Sulfonierung in Schritt c) des Verfahrens erreicht werden kann. Hierbei wird das aromatische Monomer an einer seiner Doppelbindungen sulfoniert. Besonders geeignet haben sich Kunststoff-basierenden Materialelement aus Styrol herausgestellt.

Darüber hinaus hat sich gezeigt, dass dann, wenn das Kunststoff-basierende Materialelement Weichmacher enthält, die eine aromatische Einheit aufweisen, eine besonders gute Sulfonierung in Schritt c) des Verfahrens erzielt werden kann. Hierbei wird die aromatische Einheit des Weichmachers an einer seiner Doppelbindungen sulfoniert. Kunststoff-basierende Materialelement e, die Phthalate als Weichmacher enthalten, sind dabei besonders bevorzugt und geeignet.

Gemäß einer weiteren Ausführungsform ist das Kunststoff-basierenden Materialelement ein Thermoplast, vorzugsweise ausgewählt aus der Gruppe bestehend aus: Polystyrol, Acrylnitril-Butadien-Styrol (ABS) Copolymer, Styrol-Acrylnitril (SAN) Copolymer, Acrylester-Styrol-Acrylnitril (ASA) Copolymer und Polycarbonat.

Gemäß einer weiteren Ausführungsform ist das Kunststoff-basierenden Materialelement Verfahren ein Abfallmaterial.

Erfindungsgemäß handelt es sich bei einem "Abfallmaterial" um ein Kunststoff-basierendes Materialelement, welches bereits genutzt wurde, z.B. End-of-life Produkte. Erfindungsgemäß fällt damit jeder Kunststoff-basierende Abfallstoff unter das erfindungsgemäße Abfallmaterial. Hierbei kann das Abfallmaterial bereits oxidiert vorliegen. Eine Oxidation des Abfallmaterials wird beispielsweise durch Verwitterung erreicht. Ferner sind mit "Abfallmaterialien" beispielsweise auch Überschussware wie Verschnittreste aus der Produktion gemeint. Demnach kann es sich bei einem "Abfallmaterial" um ein zuvor genutzt oder ein ungenutztes Materialelement handeln. Das erfindungsgemäße "Abfallmaterial" kann zudem sortenrein oder als Gemisch aus verschiedenen Kunststoffen vorliegen. Ferner kann das erfindungsgemäße "Abfallmaterial" mit zusätzlichem, nicht auf Kunststoff-basierendem Abfall versetzt sein, beispielsweise mit organischem oder anorganischem Abfall. Ferner kann das "Abfallmaterial" auch weitere Stoffe wie Farbe, Lacke, Additive, etc., aufweisen.

Diese Ausführungsform bietet den Vorteil, dass das Ausgangsmaterial für die Herstellung des sulfonierten Materialelements nicht aufwändig hergestellt werden muss, sondern aus bereits vorhandenen Materialien/Produkten hergestellt werden kann. Dabei kann auf gebrauchte (= Abfall im eigentlichen Sinn) oder ungebrauchte (=Überschuss/fehlerhafte Produkte) Kunststoff- Produkte, oder auf überschüssiges oder anderweitig nicht oder nicht mehr einsetzbares Kunststoff-Ausgangsmaterial für Endprodukte zurückgegriffen werden.

Gemäß einer weiteren Ausführungsform weist das erfindungsgemäße Verfahren vor der Hinzugabe des Kunststoff-basierenden Materialelements zur wässrigen Schwefel-haltigen Verbindung in Schritt b) den Schritt des Zerkleinerns des Kunststoff-basierenden Materialelements auf.

Diese Ausführungsform hat den Vorteil, dass das Materialelement nach der Zerkleinerung eine größere Oberfläche aufweist, die sulfoniert werden kann. Ferner wird als Konsequenz damit auch eine größere Oberfläche des sulfonierten, aufgerauten Kunststoff-basierenden Materialelements geschaffen. Hiermit kann mit einer vergleichbaren geringeren Menge an Ausgangsstoff deutlich mehr an adsorbierender Oberfläche hergestellt werden. Gemäß dieser Ausführungsform ist bevorzugt, wenn das Kunststoff-basierenden Materialelement auf eine mittlere Teilchengröße von ca. 10 bis 100 mm zerkleinert wird, insbesondere auf ca. 25 bis ca. 75 mm.

Ferner bietet diese Ausgestaltung den Vorteil, dass zerkleinerte Kunststoff-basierenden Materialelemente besser zu Händeln sind, als unzerkleinerte Materialelemente. Ferner kann das erhaltene Produkt besser eingesetzt werden, beispielsweise als Filtermaterial für Kationentauscher.

Gemäß einer weiteren Ausführungsform wird das Kunststoff-basierende Materialelement in einer Form eingesetzt, die ausgewählt ist aus Pulver-förmig, Granulat-förmig, Körner-förmig, Streifen-förmig oder Faden-/Faser-förmig, Kugel-förmig, Perlen-förmig.

So können bspw. Abfall-Ausgangsmaterialien, bzw. anderweitig nicht mehr verwendbare Ausgangsmaterialien von Kunststoff-Polymeren eingesetzt werden, wie bspw. Kunststoff-Polymer-Abfälle aus der Kunststoffproduktion.

Alternativ dazu kann das Kunststoff-basierende Materialelement gemäß dieser Ausgestaltung als handelsübliches Produkt erworben werden, sodass eine Vorbehandlung des Kunststoff-basierende Materialelements , wie beispielsweise eine Zerkleinerung, wegfallen kann.

Gemäß dieser Ausführungsform ist bevorzugt, wenn das Kunststoff-basierenden Materialelement eine mittlere Teilchengröße von ca. 10 bis 100 mm aufweist, insbesondere von ca. 25 bis ca. 75 mm.

Gemäß einer weiteren Ausführungsform erfolgt das Sulfonieren in Schritt c) in einem Temperaturbereich von ca. 15°C bis ca. 130°C, bevorzugt in einem Bereich von ca. 20°C bis ca. 60°C.

Diese Ausführungsform hat den Vorteil, dass die Sulfonierung ohne extensive Wärmezuführung erfolgen kann, da die Reaktionstemperatur durch die Menge des Wasserstoffperoxids und die Geschwindigkeit der Hinzugabe des Wasserstoffperoxids zur Suspension reguliert werden kann. Mit dem "Temperaturbereich" ist erfindungsgemäß die Temperatur der Reaktionsmischung aus der Schwefel-haltigen Verbindung, dem Wasserstoffperoxid und dem Materialelement gemeint. Die Reaktion aus der Schwefel-haltigen Verbindung, dem Wasserstoffperoxid und dem Materialelement, also der Sulfonierung in Schritt c), führt selbst zu einer Temperaturerhöhung der Reaktionslösung, da die Reaktion stark exotherm ist, sodass eine Erwärmung der Reaktion von außen nicht notwendig ist. Dabei findet die Reaktion bevorzugt bei Raumtemperatur (25°C) statt. Die Temperatur innerhalb der Reaktionslösung kann allein durch die exotherme Reaktion eine Temperatur von 130°C oder mehr erzeugen, wobei eine Reaktionstemperatur von über 130°C zur nachteiligen Zersetzung des Materialelements führen kann, sodass eine bevorzugte Reaktionstemperatur bei ca. 130°C liegt. Ist die Reaktionstemperatur zu gering eingestellt, verläuft die Sulfonierung mit schlechteren Ausbeuten ab.

Die vorliegende Erfindung betrifft auch die Verwendung des mittels des erfindungsgemäßen Verfahrens hergestellten sulfonierten, aufgerauten auf einem Kunststoff-basierenden Materialelement sowie das sulfonierte, auf einem Kunststoff-basierenden Materialelement selber.

In einer Ausführungsform weist, das sulfonierte, aufgeraute auf einem Kunststoff-basierenden Materialelement Bindungskapazitäten von 0,25 bis 2,0 g/mg auf, insbesondere von 0,3 bis 1,9 g/mg, bevorzugt in einem Bereich von 0,5 bis 1,85 g/mg.

Die Reihenfolge der Verfahrensschritte ist entscheidend, um die genannten Bindungskapazitäten erreichen zu können. Demnach ist es wichtig, dass zunächst die Schwefel-haltige Verbindung vorgelegt wird und vorab mit dem Materialelement reagieren kann. Durch anschließende Hinzugabe von Wasserstoffperoxid in diese Suspension können die genannten Bindungskapazitäten erreicht werden. Die Bindungskapazitäten sind auch abhängig von der Form des eingesetzten Kunststoff-basierenden Materialelements; je größer die Oberfläche des Ausgangsstoffs desto größer die Bindungskapazität. Die erfindungsgemäßen Bindungskapazitäten können nicht mit herkömmlich Sulfonierungsverfahren (die kein Wasserstoffperoxid einsetzten) von Polymeren erreicht werden, auch wenn die gleichen Ausgangsmaterialien verwendet werden.

Das mittels des erfindungsgemäßen Verfahrens hergestellte Materialelement kann erfindungsgemäß als Adsorbermaterial zur Reinigung von Trinkwasser, Abwasser oder Gewässern, insbesondere von Metall-belastetem Trinkwasser, Abwasser oder Gewässern eingesetzt werden.

Dabei kann das erfindungsgemäße Materialelement entweder direkt - bspw. in Form von Kugeln/Kügelchen oder Schwämmen/schwammartigen Elementen oder Fasern in das zu reinigende Trinkwasser/Gewässer/Abwasser gegeben werden und nach einer gewissen Zeit, also der Zeit, die zur weitestgehenden bzw. -möglichen Adsorption von das Trinkwasser/Gewässer/Abwasser verunreinigenden Stoffen an das Materialelement notwendig ist, aus dem Trinkwasser/Gewässer/Abwasser wieder entfernt werden, bspw. durch Filtern der Materialelemente aus dem Trinkwasser/Gewässer/Abwasser, oder durch Ablassen des Trinkwassers/Gewässers/Abwassers. Die Zeit kann dabei bspw. zwischen ca. 30 Sekunden und ca. 2 Stunden variieren.

Aufgrund der Sulfonierung, kann das erfindungsgemäße Materialelement auch als lonentauscher, insbesondere als Kationenaustauscher eingesetzt werden.

Alternativ kann das erfindungsgemäße Materialelement auch als "Filter" dahingehend verbaut werden, dass das Materialelement, bspw. die Kugeln/Kügelchen oder der Schwamm/schwammartige Elemente oder Fasern, in ein Trinkwasser/Gewässer/Abwasser-durchlässiges Behältnis gegeben werden, das von dem Trinkwasser/Gewässer/Abwasser durchflossen bzw. durchspült wird. Erfindungsgemäß können auch mehrere solcher "Filter" in Durchflussströmung des Trinkwassers/Gewässers/Abwassers hintereinander geschaltet sein.

In den geschilderten Alternativen werden gelöste Verbindungen innerhalb des Trinkwassers/Gewässers/ Abwassers innerhalb der aufgerauten Oberfläche bzw. an den funktionellen Gruppen des erfindungsgemäßen Materialelements adsorbiert, wodurch das Trinkwasser/Gewässer/Abwasser von diesen Stoffen befreit bzw. gereinigt wird.

Das erfindungsgemäß zu reinigende "Gewässer" kann dabei bspw. jedes Abwasser aus Industrie/Krankenhäusern/Haushalten/Landwirtschaft etc. sein, und allgemein Abwasser darstellen, das Kläranlagen zugeführt wird, oder aber Fluss-/Bach-/Meer- oder sonstiges Wasser, das einem Reinigungsprozess unterzogen werden soll. In der metallverarbeitenden Industrie und in den dort produzierten Abwässern kann das erfindungsgemäße sulfonierte, aufgeraute Materialelement besonders bevorzugt eingesetzt werden, da die mit Metallionen verunreinigten Abwässer aufgrund der Kationentauscher-Eigenschaft des erfindungsgemäßen Materialelements besonders gut gereinigt werden können.

Die Substanzen, die das Wasser (Trinkwasser/Gewässer/ Abwasser) verunreinigen und von denen das Wasser befreit werden soll, sind neben Metallkationen bspw. organische und/oder mikrobielle Verunreinigungen, bspw. Chlor, Ozon, Medikamentenrückstände, insbesondere Antibiotika, Schmerzmittel, Hormone bzw. Hormonpräparate, Pestizide, Pflanzenschutzmittel, Farb- und Geschmacksstoffe, Lösungsmittel, Viren, u.a. Stoffe. Diese Stoffe können im Wasserkreislauf in Konzentrationen von wenigen ng/L bis hin zu einigen µg/L vorkommen.

Die für die Gewässerreinigung eingesetzten erfindungsgemäßen Materialelemente können nach deren erfindungsgemäßem Einsatz gereinigt und wiederverwendet, zur anderweitigen Verwendung recycelt, verbrannt oder anderweitig entsorgt werden. Insbesondere können die erfindungsgemäßen Materialelemente durch ein polares Lösungsmittel bspw. Salzsäure wieder regeneriert, also von den Stoffen gereinigt werden, die in/an die angeraute Oberfläche bzw. an die funktionellen Stellen adsorbiert haben. Die so regenerierten Materialelemente können dann einem weiteren Einsatz unterzogen werden.

Entsprechend kann in einer anderen Ausführungsform das erfindungsgemäße Materialelement auch für diverse Zwecke als Ionenaustauscher, insbesondere als Kationentauscher eingesetzt werden.

Die vorliegende Erfindung betrifft ebenfalls einen Kationenaustauscher, der ein Materialelement aufweist, das nach dem erfindungsgemäßen Verfahren hergestellt ist.

Der Kationenaustauscher kann direkt aus dem Materialelement bestehen, oder aus einem Behältnis, der das erfindungsgemäße Materialelement aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Nachstehend wird die Erfindung anhand der aufgeführten Beispiele und Figuren beispielhaft näher erläutert. Es zeigen:
**Fig. 1A** eine Rasterelektronenmikroskop-Aufnahme eines Polystyrol-Pulver vor dem Schritt der Sulfonierung in einer 150-fache Vergrößerung;
**Fig. 1B** eine Rasterelektronenmikroskop-Aufnahme eines Polystyrol-Pulver vor dem Schritt der Sulfonierung in einer 1000-fache Vergrößerung;
**Fig. 2A** eine Rasterelektronenmikroskop-Aufnahme eines erfindungsgemäßen Materialelements in einer 150-fache Vergrößerung;
**Fig. 2B** eine Rasterelektronenmikroskop-Aufnahme eines erfindungsgemäßen Materialelements in einer 1000-fache Vergrößerung;
**Fig. 3A** eine EDX-Aufnahme eines Polystyrol-Pulver vor dem Schritt der Sulfonierung;
**Fig. 3B** eine EDX-Aufnahme eines erfindungsgemäßen Materialelements;
**Fig. 4** eine erste graphische Darstellung des zeitlichen Verlauf der Kupferkonzentration zur Berechnung der gebundenen Kupfermenge in Abhängigkeit des verwendenden Adsorbers; und
**Fig. 5** eine zweite graphische Darstellung des zeitlichen Verlauf der Kupferkonzentration zur Berechnung der Beladung des verwendeten Adsorbens.

### Beispiele

### Vergleichsexperiment 1 - Herstellung von sulfoniertem Polystyrol

Zunächst wurde eine Beize für die Sulfonierung hergestellt. Die Beize hatte eine Zusammensetzung aus vier Volumenteilen 96 %-iger Schwefelsäure (H₂SO₄) (der Firma AppliChem) und einem Volumenteil 30 %-igem Wasserstoffperoxid (H₂O₂) (der Firma AppliChem). Es wurden insgesamt 100 mL Beize hergestellt. Durch die Reaktion der Schwefelsäure und dem Wasserstoffperoxid, welche zur Hitzeentwicklung führte, bildete sich Peroxomonoschwefelsäure. In die noch heiße Beize wurde Polystyrol Pulver (der Firma INEOS Styrolution) gegeben und für 10 min bei 100 °C gerührt. Anschließend wurde das sulfonierte Polystyrol Pulver filtriert und mit Wasser gewaschen und anschließend getrocknet.

### Vergleichsexperiment 2 - Überprüfung der Sulfonierung

Zur Überprüfung des Sulfonierungsgrads und der Oberflächenänderung kamen Analysentechniken der EDX-Analyse und das REM zum Einsatz.

### REM-Analyse

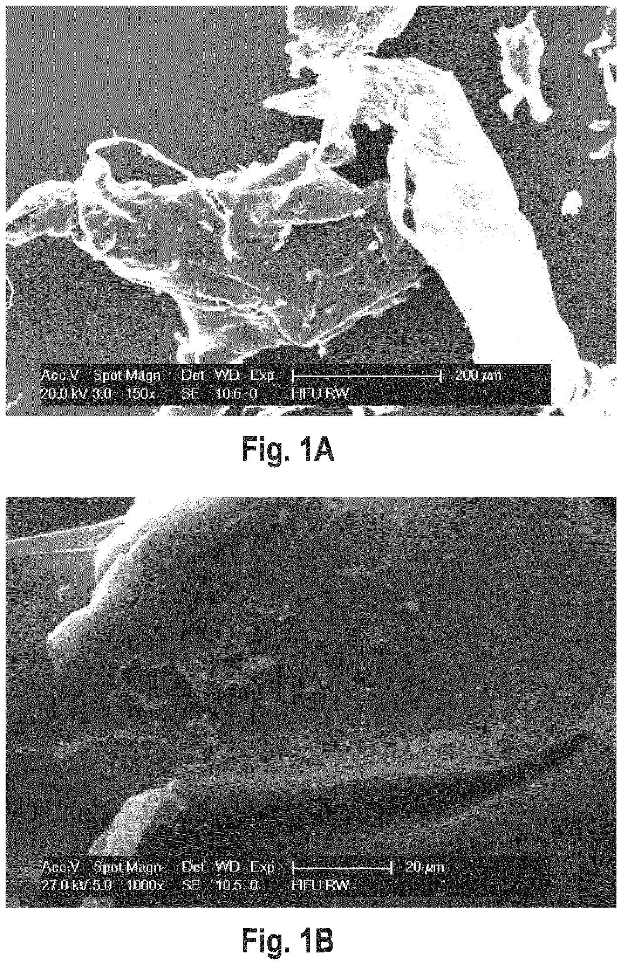

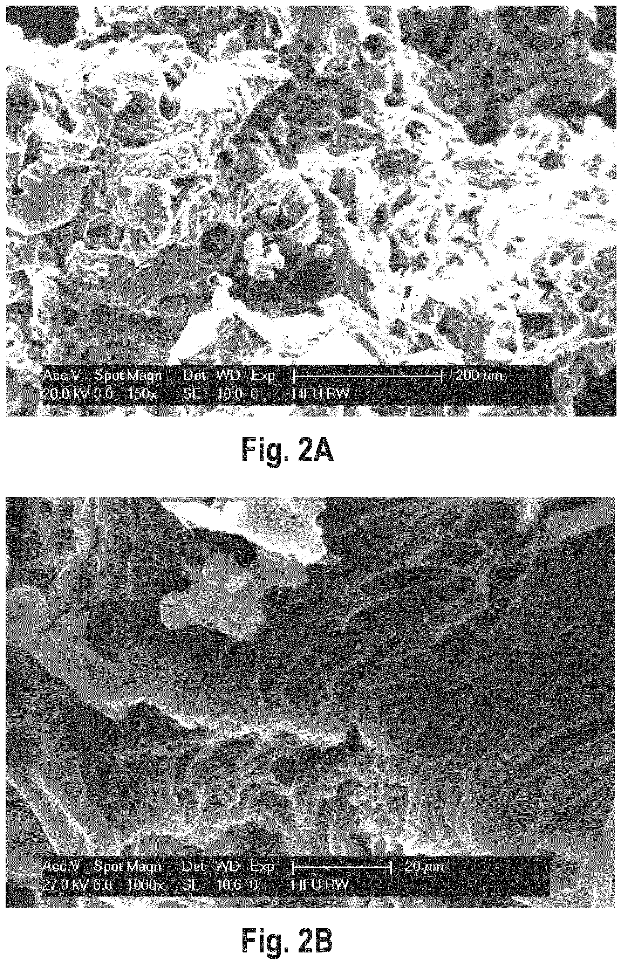

Die REM-Untersuchungen sollten Aufschluss über die Oberflächenbeschaffenheit geben. Die Sulfonierung zeigte eine visuelle Veränderung zwischen Polystyrol-Pulver und sulfoniertem Polystyrol. Das Polystyrol-Pulver mit einer weißen glatten und flockenartigen Oberfläche veränderte sich zu einer rauen grauschwarzen Oberfläche. Die Veränderung der Oberfläche ist in den Figuren 1 und 2 gezeigt. Fig.1A und Fig. 1B zeigen eine REM-Aufnahme des Polystyrol-Pulver vor dem Schritt der Sulfonierung. Hierbei zeigt Fig. 1A eine 150-fache Vergrößerung, während Fig.1B eine 1000-fache Vergrößerung anzeigt. Fig. 2A und Fig. 2B zeigen eine REM-Aufnahme des Polystyrol-Pulver nach dem Schritt der Sulfonierung; also das sulfonierte Polystyrol-Pulver. Hierbei zeigt Fig. 2A eine 150-fache Vergrößerung, während Fig. 2B eine 1000-fache Vergrößerung anzeigt.

Die REM-Aufnahmen bestätigen die visuelle Beobachtung. Das unbehandelte Polystyrol-Pulver hat eine glatte "schuppige" Struktur, siehe Fig. 1A und 1B. Das sulfonierte Polystyrol weist dagegen eine aufgeraute "schwammartige" Struktur in Form von Kratern und Klüften auf, siehe Fig. 2A und Fig. 2B. Hiermit konnte belegt werden, dass der Beizprozess/die Sulfonierung eine Oberflächenveränderung hervorruft.

### EDX-Analyse

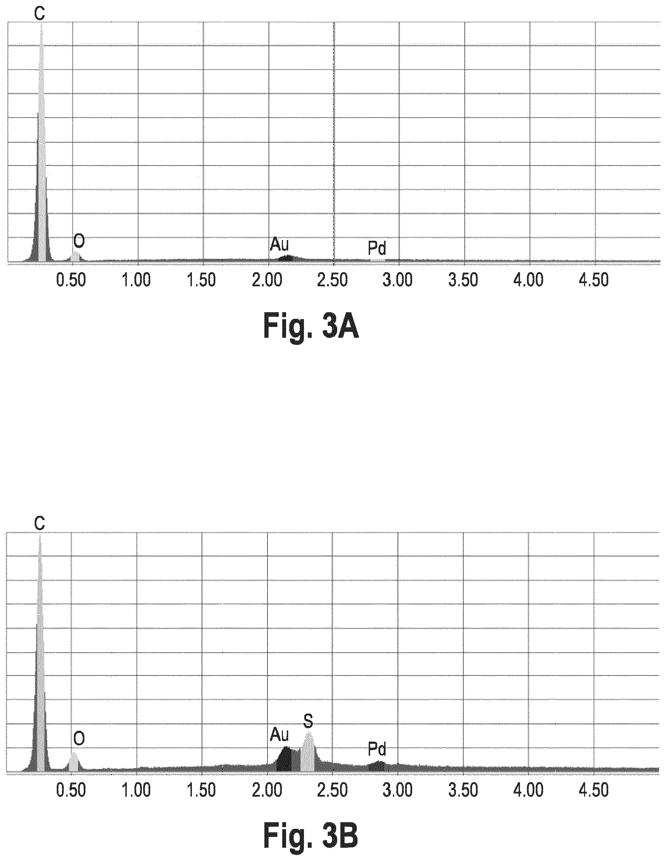

Die Sulfonierung sollte anhand der Materialzusammensetzung der Oberfläche nachgewiesen werden. Die Ergebnisse der EDX-Analyse sind in den Fig. 3A und 3B gezeigt. Fig.3A zeigt eine EDX-Aufnahme des Polystyrol-Pulver vor dem Schritt der Sulfonierung. Fig. 3B zeigt eine EDX-Aufnahme des Polystyrol-Pulver nach dem Schritt der Sulfonierung, also das sulfonierte Polystyrol-Pulver.

In Fig. 3B ist klar ein "Schwefel"-Peak erkennbar, der in Fig. 3A fehlt. Die weiteren Elemente, Kohlenstoff und Sauerstoff, gehören zur (sulfonierten) Polystyrol Struktur. Damit konnte nachgewiesen werden, dass die Sulfonierung erfolgreich war.

### Vergleichsexperiment 3 - Messung der Ionenaustauscher-Kapazität

Für alle Versuche wurde eine Kupfer-Lösung mit einer Ausgangskonzentration von 20 mg/L als Vorlage hergestellt. Diese Lösung wurde mit einem Volumenstrom von 7,9 mL/min durch eine mit 3 g Adsorber bzw. Referenzsubstanz gefüllte Säule gespült. Die Dauer der Versuche betrug 40 min. Als Adsorber wurde sulfoniertes Polystyrol bzw. Aktivkohle verwendet. Als Referenzsubstanz diente das nicht sulfonierte Polystyrol-Pulver.

### Mengenberechnung

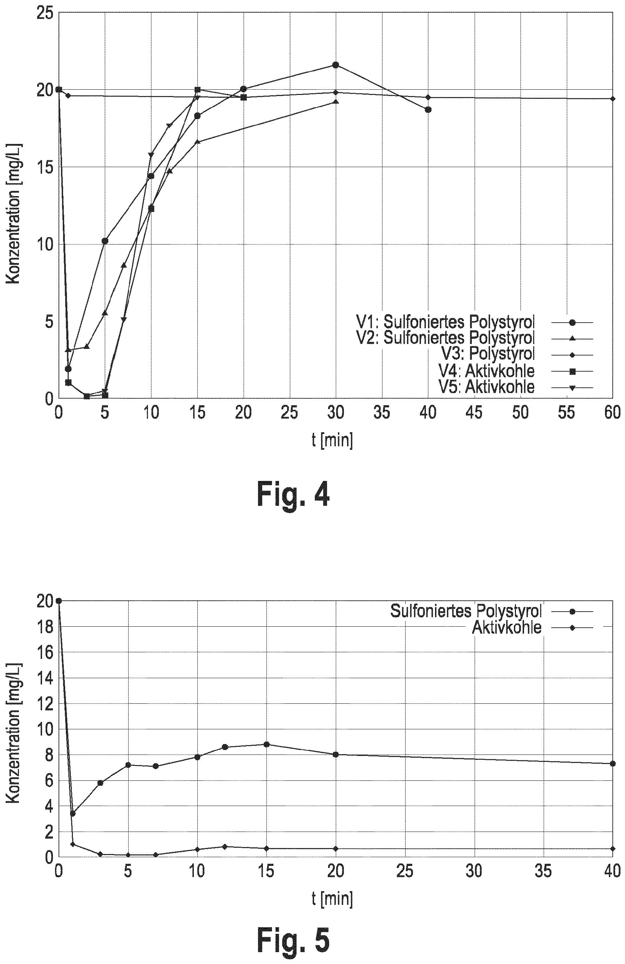

In einer ersten Versuchsreihe aus fünf Einzelversuchen, wurde die gefüllte Säule mit der Kupfer-Lösung durchspült wobei die durchspülte Lösung separat aufgefangen wurde. Zu verschiedenen Zeitpunkten wurden Proben entnommen und die Änderung der Kupferkonzentration analysiert, woraus sich ein zeitlicher Verlauf der Konzentrationsänderung ergibt, welcher in Fig. 4 abgebildet ist.

Für V1 und V2 wurde jeweils sulfoniertes Polystyrol als Adsorber verwendet. Im Versuch 1 (V1) erreicht die Konzentration nach 1 min ihren geringsten Wert mit 1,92 mg/L. Bei Versuch 2 (V2) hingegen wird als geringster Wert eine Konzentration von 3,12 mg/L gemessen. Danach steigt die Konzentration in beiden Versuchen (V1 und V2) an. Nach 5 min beträgt die Konzentration im V1 10,20 mg/L, im Gegensatz zu V2 5,50 mg/L. Das bedeutet, dass die Konzentration im V2 langsamer anstieg. Die Ausgangskonzentration von 20 mg/L ist in V1 nach 20 min und in V2 erst 10 min später erreicht. Das bedeutet, dass im V2 länger Kupfer am Adsorbens gebunden wird und dadurch später wieder die Ausgangskonzentration von 20 mg/L erreicht. Das bedeutet auch, dass die Säule in V1 nach 20 min mit Kupfer gesättigt ist, während die Säule in V2 nach 30 min eine Sättigung erreicht. Über das berechnete Flächenintegral wird für V1 ein Wert von 0,91 mg gebundenem Kupfer erhalten. Bei V2 ergibt sich ein Wert von 1,45 mg Kupfer.

Für V3 wurde Polystyrol als Referenzsubstanz verwendet. Unbehandeltes Polystyrol als Referenzprobe zeigt, dass innerhalb der Versuchsdauer minimal Kupfer am Adsorbens gebunden wird. Die Konzentration der aufgefangenen Lösung schwankt zwischen 19,40 mg/L und 19,80 mg/L. Dies bestätigt wiederum das berechnete Flächenintegral mit einem Wert von 0,21 mg Kupfer.

Für V4 und V5 wurde jeweils sulfoniertes Polystyrol als Adsorber verwendet. Nach 1 min liegt in V4 der Konzentrationswert bei 1,04 mg/L und im V5 bei 1,00 mg/L. Die Konzentration nimmt bei beiden Versuchen bis zur 3 min ab und steigt danach wieder an. Nach 15 min ist bei beiden Versuchen die Ausgangskonzentration erreicht; sie sind demnach ab diesem Zeitpunkt gesättigt. Das berechnete Flächenintegral aus V4 ergab eine gebundene Kupfermenge von 1,39 mg und für V5 einen Wert von 1,26 mg Kupfer.

### Praxisermittlung

In einer zweiten Versuchsreihe aus zwei Einzelversuchen, wurde die gefüllte Säule mit der Kupfer-Lösung durchspült wobei die durchspülte Lösung wieder zurückgeführt um wieder als Vorlage zu dienen um erneut durch die Säule gespült zu werden. Die Rückführung der Flüssigkeit dient dazu, das Flächenintegral der gebundenen Kupfermenge am Adsorbens (sulfoniertes Polystyrol) messtechnisch zu bestimmen. Zu verschiedenen Zeitpunkten wurden Proben entnommen und die Änderung der Kupferkonzentration analysiert, woraus sich ein zeitlicher Verlauf der Konzentrationsänderung ergibt, welcher in Fig. 5 abgebildet ist.

Für diesen Versuch wurde angenommen, dass die Konzentration der Vorlage über die Zeit abnimmt und bei erschöpfter Kapazität des Adsorbens (sulfoniertes Polystyrol/Aktivkohle) einen konstanten Wert erreicht. Insgesamt wurden zwei Versuche, mit sulfoniertem Polystyrol und Aktivkohle, durchgeführt. Die Kupferkonzentration in der Vorlage wurde zu den gleichen Zeitpunkten gemessen wie in der ersten Versuchsreihe "Mengenberechnung".

Die Kurvenverläufe zeigen in beiden Fällen, dass die Ausgangskonzentration c₀ von 20 mg/L zunächst stark abnimmt. Die Aktivkohle bindet innerhalb der ersten 3 min das Kupfer beinahe gänzlich, wodurch über die restliche Versuchszeit die Konzentration auf einem Wert von 0,6 mg/L verbleibt. Das sulfonierte Polystyrol erreicht nach der 1 min eine Sättigung. Über die restliche Versuchsdauer pendelt sich ein Wert auf 8 mg/L ein. Nach 40 min betrug die Konzentration c₁ für die Aktivkohle 0,65 mg/L und für das sulfonierte Polystyrol 7,30 mg/L.

Aus der Berechnung ergibt sich folgende Beladung der Adsorbens:
Aktivkohle
   cₒ - c₁ = 20 mg/L - 0,65 mg/L = 19,35 mg/L
   19,35 mg/L x 0,10 L Vorlage = 1,935 mg Kupfer
Sulfoniertes Polystyrol
   cₒ - c₁ = 20 mg/L - 7,3 mg/L = 12,7 mg/L
   12,7 mg/L x 0,10 L Vorlage = 1,27 mg Kupfer

Somit werden 1,94 mg Kupfer innerhalb der Aktivkohle und 1,27 mg Kupfer innerhalb des sulfonierten Polystyrols gebunden.

### Zusammenfassung des Vergleichsexperiments 3

Die vorausgegangenen Versuche (Mengenberechnung und Praxisermittlung) unterschieden sich in der Flüssigkeitsführung nach dem Adsorber. Daraus ergaben sich nach Bestimmung der Restkupferkonzentrationen errechnete als auch praktisch ermittelte Kupfermengen, welche am Adsorbens zurückgehalten wurden.

Rechengrundlagen sind 3 g Adsorbens und 2 mg Kupfer in der 100 mL Vorlage pro Versuch. Die nachfolgende Tabelle 1 zeigt als Zusammenfassung eine Gegenüberstellung der Wirkungsgrade von sulfoniertem Polystyrol mit Aktivkohle und unbehandeltem Polystyrol als Referenz.

| | Adsorbens | | |
|---|---|---|---|
| | Polystyrol | Sulfoniertes Polystyrol | Aktivkohle |
| **Berechnete Menge durch** | V3: 0,21 | V1: 0,92 | V4: 1,39 |
| Flächenintegral/mg | | V2: 1,45 | V5: 1,26 |
| Mittelwert/mg | 0,21 | 1,19 | 1,33 |
| Restmenge im Becherglas/mg | 1,79 | 0,81 | 0,67 |
| Austauschgrad/% | 10,5 | 59,5 | 66,5 |
| Abweichung Adsorbens | 56,0 % weniger Kupfer als Aktivkohle | 7,0 % weniger Kupfer als Aktivkohle | 100 % Kupfer |
| mg_{Kupfer}/g_{Adsorbens} | 0,07 | 0,40 | 0,44 |
| Zeit bis zum Erreichen von c₀/min | - | V1: 20 | V4 und V5: 15 |
| | | V2: 30 | |
| | | | |
| **Ermittelte Menge** durch Versuch/mg | - | 1,27 | 1,94 |
| Restmenge im Becherglas/mg | - | 0,73 | 0,06 |
| Austauschgrad/% | - | 63,5 | 97,0 |
| Abweichung Adsorbens | - | 33,5 % weniger Kupfer als Aktivkohle | 100 % Kupfer |
| mg_{Kupfer}/g_{Adsorbens} | - | 0,42 | 0,65 |
| Zeit bis zum Erreichen von c₀/min | - | - | 3 |

Obgleich die Aktivkohle im Vergleich zum sulfonierten Polystyrol das Kupfer effektiver bindet, so kann doch aus der Tabelle deutlich entnommen werden, dass das sulfonierte Polystyrol als Ionenaustauscher wirkt.

### Experiment 4 - Vergleich der Sulfonierungsverfahren

Basierend auf der Erkenntnis, dass sich Polystyrol-Pulver in einer Beize aus Wasserstoffperoxid und Schwefelsäure vorteilhaft sulfonieren lässt, wurden weitere Versuche zur Optimierung des Sulfonierungsverfahrens durchgeführt. Im Rahmen dieser Versuche wurden die Adsorber-Fähigkeiten von Kunststoff-basierenden Materialelementen, die nach dem herkömmliche Sulfonierungs-Verfahren hergestellt wurden, und von Kunststoff-basierenden Materialelementen, die nach dem erfindungsgemäßen Verfahren sulfoniert wurden verglichen. Die Adsorber-Fähigkeit wurde gegenüber Nickel und Kupfer untersucht.

Das erfindungsgemäße sulfonierte Kunststoff-basierende Materialelement wurde nicht analog zu Vergleichsexperiment 1 hergestellt, sondern nach dem erfindungsgemäßen Verfahren. Hierzu wurden 50 mL konzentrierte Schwefelsäure (96%-Vol. - H₂SO₄; AppliChem) vorgelegt. Das Polystyrol Pulver (INEOS Styrolution) wurde in die konzentrierte Schwefelsäure gegeben, wobei portionsweise 10 mL 30%-iges Wasserstoffperoxid (AppliChem) hinzugegeben wurde. Die Sulfonierung erfolgt hierbei ohne Wärmeeintrag von außen, da sich die Reaktionslösung von selbst erhitzte.

Mit den Versuchen konnte gezeigt werden, dass die Sulfonierung damit beeinflusst werden kann, zu welchem Zeitpunkt das Polystyrol zur Schwefelsäure bzw. zu welchem Zeitpunkt das Wasserstoffperoxid hinzugegeben wird. Wird das Polystyrol direkt im Anschluss an die Herstellung einer Beize hinzugegeben, also nachdem die Schwefel-haltige Verbindung mit dem Wasserstoffperoxid in Reaktion gebracht wurde, kann es zu einer ungewollten Verklumpung kommen (analog Vergleichsexperiment 1). Die Versuche zeigten auch, dass dann, wenn die Beize aus Schwefelsäure und Wasserstoffperoxid nicht frisch hergestellt wird, also wenn zwischen der Herstellung der Beize und der Sulfonierung zu viel Zeit (ca. 30 Minuten und länger) vergeht (oder anders ausgedrückt: wenn die Beize selbst abkühlt ist), die Sulfonierung in ungenügenden Ausbeuten erfolgt. Es zeigte sich, dass eine optimale Sulfonierung zusammen mit einer verbesserten Adsorberfähigkeit des sulfonierten Polymer Produkts dadurch erreicht werden kann, wenn zunächst eine wässrige Schwefel-haltige Verbindung vorgelegt wird, in die das Kunststoff-basierendes Materialelement hinzugegeben wird und erst danach die Sulfonierungsreaktion mittels der Zugabe von Wasserstoffperoxid reguliert wird. Demnach konnte das Sulfonierungsverfahren hin zum erfindungsgemäßen Verfahren deutlich verbessert werden.

Zum Vergleich wurde auch sulfoniertes Polystyrol hergestellt, welches nach dem herkömmlichen Verfahren sulfoniert wurde. Hierzu wurde Polystyrol mit Schwefelsäure 96% -Vol. bei 60 °C für 1,5 h zur Reaktion gebracht.

Für Nickelversuche wurden zwei Nickellösungen mit einer Ausgangskonzentration von c₀= 7,78 mg/L mit einem Anfangs- pH-Wert von 2,87 (V1) und c₀= 7,54 mg/L mit einem Anfangs- pH-Wert von 2,85 (V2) als Vorlage hergestellt. Um die Beeinflussung des pH-Werts der Lösung auf die Adsorbens-Kapazität zu untersuchen, wurden die jeweiligen Nickellösungen mit 1 mol/L Natronlauge (NaOH) auf einen pH-Wert von 5,58 (V1) und pH-Wert von 7,92 (V2) eingestellt. Anschließend wurden 100 mL der jeweiligen Lösungen vorgelegt und mit 0,3 g Adsorber ((i) sulfoniertes Polystyrol, hergestellt nach dem Vergleichsexperiment 1, s.o., (ii) sulfoniertes Polystyrol, hergestellt nach dem erfindungsgemäßen Verfahren, bzw. (iii) sulfoniertes Polystyrol, hergestellt nach einem herkömmlichen Verfahren) versetzt. Zu unterschiedlichen Zeiten wurden Proben entnommen und die Änderung der Nickelkonzentration analysiert (nach 9 min, 18 min, 1 h, 2h, 4h, 8h, 12h und 24h). Die Proben wurden mittels Test-Kits der Firma Macherey Nagel analysiert. Die Messung fand mit dem Spektralphotometer NANOCOLOR VIS von der Firma Macherey Nagel mittels Photometrie statt.

Die Ergebnisse der Nickel-Versuche sind in der nachfolgenden Tabelle abgebildet.

| | | Versuch 1 Startkonzentration c₀= 7,78 mg/L | | Versuch 2 Startkonzentration c₀=7,54 mg/L | |
|---|---|---|---|---|---|
| Adsorbens | t/h | Adsorbens-Kapazität /% | mg/g | Adsorbens-Kapazität /% | mg/g |
| sulfoniertes Polystyrol gemäß Vergleichsexperiment 1 | 0 | 0 | 0 | 0 | 0 |
| | 0,15 | 21,2 | 0,550 | 25,1 | 0,630 |
| | 0,30 | 21,2 | 0,550 | 23,9 | 0,600 |
| | 1 | 21,9 | 0,567 | 23,1 | 0,580 |
| | 2 | 21,2 | 0,550 | 23,6 | 0,593 |
| | 4 | 22,6 | 0,587 | 24,3 | 0,610 |
| | 24 | 22,1 | 0,573 | nicht gemessen | |
| | | | | | |
| Herkömmlich sulfoniertes Polystyrol | t/h | Adsorbens-kapazität/% | mg/g | | |
| | 0 | 0 | 0 | | |
| | 0,15 | 53,8 | 1,333 | | |
| | 0,30 | 53,6 | 1,330 | | |
| | 1 | 53,4 | 1,323 | | |
| | 2 | 53,2 | 1,320 | | |
| | 4 | 52,4 | 1,300 | | |
| | 24 | nicht gemessen | | | |
| | | | | | |
| Erfindungsgemäß sulfoniertes Polystyrol | t/h | Adsorbens-kapazität/% | mg/g | | |
| | 0 | 0 | 0 | | |
| | 0,15 | 67,1 | 1,663 | | |
| | 0,30 | 70,6 | 1,750 | | |
| | 1 | 72,8 | 1,807 | | |
| | 2 | 73,5 | 1,823 | | |
| | 4 | 72,8 | 1,807 | | |
| | 24 | 73,3 | 1,817 | | |

Für Kupferversuche wurden drei Kupferlösungen mit einer Ausgangskonzentration von c₀= 7,78 mg/L mit einem Anfangs- pH-Wert von 4,5 bis 5 (V1), c₀= 7,54 mg/L mit einem Anfangs- pH-Wert von 2,98 (V2) und c₀= 6,92 mg/L mit einem Anfangs- pH-Wert von 2,97 (V3) als Vorlage hergestellt. Um die Beeinflussung des pH-Werts der Lösung im Hinblick auf die Adsorbens-Kapazität zu untersuchen, wurden die Kupferlösungen V2 und V3 mit 1 mol/L Natronlauge (NaOH) auf einen pH-Wert von 5,88 (V2) und pH-Wert von 7,33 (V3) eingestellt. Anschließend wurden 100 mL der jeweiligen Lösungen vorgelegt und mit 0,3 g Adsorber ((i) sulfoniertes Polystyrol, hergestellt nach dem Vergleichsexperiment 1, s.o., (ii) sulfoniertes Polystyrol, hergestellt nach dem erfindungsgemäßen Verfahren, bzw. (iii) sulfoniertes Polystyrol, hergestellt nach einem herkömmlichen Verfahren) versetzt. Zu unterschiedlichen Zeiten wurden Proben entnommen und die Änderung der Kupferkonzentration analysiert (nach 9 min, 18 min, 1 h, 2h, 4h, 8h, 12h und 24h). Die Proben wurden mittels Test-Kits der Firma Macherey Nagel analysiert. Die Messung fand mit dem Spektralphotometer NANOCOLOR VIS von der Firma Macherey Nagel mittels Photometrie statt.

Die Ergebnisse der Kupfer-Versuche sind in der nachfolgenden Tabelle abgebildet.

| | | | Versuch 1 Startkonzentration co=7,78 mg/L | | | | Versuch 2 Startkonzentration co=7,76 mg/L | | | Versuch 3 Startkonzentration c₀= 6,92 mg/L | |
|---|---|---|---|---|---|---|---|---|---|---|---|
| Adsorbens | t/h | | Adsorbens-kapazität /% | | mg/g | | Adsorbens-kapazität /% | | mg/g | Adsorbenskapazität/% | mg/g |
| sulfoniertes Polystyrol gemäß Vergleichsexperiment 1 | 0,15 | | 27,1 | | 0,703 | | 28,1 | | 0,727 | 81,9 | 1,890 |
| | 0,30 | | 25,6 | | 0,663 | | 28,5 | | 0,737 | 82,7 | 1,907 |
| | 1 | | 24,9 | | 0,647 | | 28,5 | | 0,737 | 82,7 | 1,907 |
| | 2 | | 25,3 | | 0,657 | | 29,1 | | 0,753 | 82,1 | 1,893 |
| | 4 | | 24,6 | | 0,637 | | 29,9 | | 0,773 | 82,1 | 1,893 |
| | 24 | | Konzentration nicht gemessen | | | | 28,9 | | 0,747 | 83,4 | 1,923 |
| Herkömmlich sulfoniertes Polystyrol | | t/h | | Adsorbens-kapazität /% | | mg/g | | | | | |
| | | 0,15 | | 55,1 | | 1,307 | | | | | |
| | | 0,30 | | 55,1 | | 1,307 | | | | | |
| | | 1 | | 53,2 | | 1,263 | | | | | |
| | | 2 | | 51,8 | | 1,230 | | | | | |
| | | 4 | | 51,1 | | 1,231 | | | | | |
| | | 24 | | 45,8 | | 1,087 | | | | | |
| | | | | | | | | | | | |
| Erfindungsgemäß sulfoniertes Polystyrol | | t/h | | Adsorbens-kapazität/% | | mg/g | | | | | |
| | | 0,15 | | 81,8 | | 1,887 | | | | | |
| | | 0,30 | | 86,3 | | 1,990 | | | | | |
| | | 1 | | 89,7 | | 2,070 | | | | | |
| | | 2 | | 90,3 | | 2,083 | | | | | |
| | | 4 | | 90,0 | | 2,077 | | | | | |

Die Tabelle zeigt eindrücklich, dass sulfoniertes Polystyrol, das mit dem erfindungsgemäßen Verfahren hergestellt wurde, eine deutlich bessere Adsorbens-Kapazität als das klassisch sulfonierte Polystyrol und das sulfonierte Polystyrol gemäß des Vergleichsexperiments 1 aufweist. Die oben geschilderten Experimente zeigen, dass das erfindungsgemäße Verfahren sich gegenüber dem herkömmlichen Verfahren insbesondere durch die verbesserte Wirtschaftlichkeit (kein Energieeintrag) und durch eine bessere Anbindung von Schwermetallen auszeichnet.

## Patentansprüche

1. Verfahren zur Herstellung eines sulfonierten, aufgerauten, auf einem Kunststoff-basierenden Materialelements, aufweisend die folgenden aufeinanderfolgenden Schritte:
a) Bereitstellen einer wässrigen Schwefel-haltigen Verbindung;;
b) Hinzugabe eines Kunststoff-basierenden Materialelements zur wässrigen Schwefel-haltigen Verbindung, wobei eine Suspension erhalten wird; und
c) Sulfonieren des Kunststoff-basierenden Materialelements durch Hinzugabe von Wasserstoffperoxid zur Suspension, unter Bildung des sulfonierten, aufgerauten, auf einem Kunststoff-basierenden Materialelements.

2. Verfahren nach Anspruch 1, wobei die in Schritt c) Peroxomonoschwefelsäure gebildet und/oder hinzugefügt wird.

3. Verfahren nach Anspruch 1 oder 2, wobei die Schwefel-haltige Verbindung ausgewählt ist aus der Gruppe bestehend aus: Sulfoxylsäure (H₂SO₃), schweflige Säure (H₂SO₃), Schwefelsäure (H₂SO₄), thioschweflige Säure (H₂S₂O₂), Thioschwefelsäure (H₂S₂O₃), dithionige Säure (H₂S₂O₄) dischweflige Säure (H₂S₂O₅), Dithionsäure (H₂S₂O₆), Dischwefelsäure (H₂S₂O₇), Peroxodischwefelsäure, (H₂S₂O₈), Schwefeltrioxid (SO₃), Fluorsulfonsäure (HSO₃F) und Chlorsulfonsäure (HSO₃Cl), wobei insbesondere Schwefelsäure (H₂SO₄), Peroxodischwefelsäure, (H₂S₂O₈), Schwefeltrioxid (SO₃) und Chlorsulfonsäure (HSO₃Cl) bevorzugt sind.

4. Verfahren nach einem der vorstehenden Ansprüche, wobei die Schwefel-haltige Verbindung Schwefelsäure ist und wobei die Schwefelsäure und das Wasserstoffperoxid in einem Volumenverhältnis aus 10:1 bis 1:1, besonders bevorzugt in einem Verhältnis aus 5:1 bis 3:1 verwendet wird.

5. Verfahren nach einem der vorstehenden Ansprüche, wobei das Kunststoff-basierenden Materialelement, ein Homopolymer oder Copolymer ist, bestehend aus mindestens einem aromatischen Monomer.

6. Verfahren nach einem der vorstehenden Ansprüche, wobei das Kunststoff-basierende Materialelement ein Thermoplast ist, vorzugsweise ausgewählt aus der Gruppe bestehend aus: Polystyrol, Acrylnitril-Butadien-Styrol (ABS) Copolymer, Styrol-Acrylnitril (SAN) Copolymer, Acrylester-Styrol-Acrylnitril (ASA) Copolymer und Polycarbonat.

7. Verfahren nach einem der vorstehenden Ansprüche, wobei das Kunststoff-basierende Materialelement ein Abfallmaterial ist.

8. Verfahren nach einem der vorstehenden Ansprüche, wobei das Verfahren vor der Hinzugabe des Kunststoff-basierenden Materialelements zur wässrigen Schwefel-haltigen Verbindung in Schritt b) den Schritt des Zerkleinerns des Kunststoff-basierenden Materialelements aufweist.

9. Verfahren nach einem der vorstehenden Ansprüche, wobei das Kunststoff-basierende Materialelement in einer Form eingesetzt wird, die ausgewählt ist aus Pulver-förmig, Granulat-förmig, Körner-förmig, Streifen-förmig oder Faden-/Faserförmig, Kugel-förmig, Perlen-förmig.

10. Verfahren nach einem der vorstehenden Ansprüche, wobei das Sulfonieren in Schritt c) in einem Temperaturbereich von 15°C bis 130°C erfolgt, bevorzugt in einem Bereich von 20°C bis 60°C.

11. Verwendung des sulfonierten, aufgerauten, auf einem Kunststoff-basierenden Materialelements, hergestellt nach einem der Ansprüche 1 bis 10, als Adsorbermaterial zur Reinigung von Trinkwasser, Abwasser oder Gewässern, insbesondere von Metall-belastetem Trinkwasser, Abwasser oder Gewässern.

12. Verwendung des sulfonierten, aufgerauten, auf einem Kunststoff-basierenden Materialelements hergestellt nach einem der Ansprüche 1 bis 10 als Ionenaustauscher, insbesondere als Kationenaustauscher.

13. Filter, aufweisend das sulfonierte, aufgeraute auf einem Kunststoff-basierenden Materialelements, hergestellt nach einem Verfahren der Ansprüche 1 bis 10.
